# EUROPÄISCHE PATENTSCHRIFT

(11) **EP 1 444 045 B1**
(45) Veröffentlichungstag und Bekanntmachung des Hinweises auf die Patenterteilung: **06.01.2010**
(21) Anmeldenummer: 02774726.0
(22) Anmeldetag: 17.10.2002
(51) Int. Cl.: B04B 11/04

(54) **ZENTRIFUGE MIT EINER VORRICHTUNG ZUR BESTIMMUNG DES RESTFEUCHTEGEHALTS VON FESTSTOFFKUCHEN**
CENTRIFUGE COMPRISING A DEVICE FOR DETERMINING THE CAKE MOISTURE
CENTRIFUGEUSE AVEC UN DISPOSITIF POUR DETERMINER LA TENEUR RESIDUELLE EN LIQUIDE DE GATEAUX DE SOLIDES

(30) Priorität: 29.10.2001 DE 10153353
(43) Veröffentlichungstag der Anmeldung: 11.08.2004
(73) Patentinhaber: Bayer Technology Services GmbH, 51368 Leverkusen (DE)
(72) Erfinder: KESSLER, Ruth, 51375 Leverkusen (DE); BERG, Karl, Helmut, 51467 Bergisch Gladbach (DE); PATTBERG, Karl-Gustav, 50374 Erftstadt (DE); DICK, Werner, 51371 Leverkusen (DE)
(86) Internationale Anmeldenummer: PCT/EP2002/011619
(87) Internationale Veröffentlichungsnummer: WO 2003/037522

(56) Entgegenhaltungen:
- EP-A- 0 891 814
- WO-A-00/16081
- CH-A- 640 352
- DE-C- 3 615 013
- US-A- 3 686 606

## Beschreibung

Die Erfindung betrifft eine Zentrifuge mit einer Vorrichtung zur kontinuierlichen Bestimmung des Restfeuchtegehaltes von Feststoffhuchen.

Es sind Schälzentrifugen mit vertikaler oder horizontal angetriebener Trommel bekannt. Bekannt ist auch, dass bei schlecht fließenden feuchten Feststoffen der Feststoffaustrag über Schnecken anstatt über Schurren erfolgt.

Eine Schälzentrifuge muss bisher nach Erfahrungswerten betrieben werden, nach denen angenommen wird, dass der Feststoffkuchen nach einer bestimmten Entfeuchtungsdauer eine bestimmte Restfeuchte erlangt hat, worauf dann weitere Arbeitsschritte durchgeführt werden können, wie z.B. das Ausschälen des Feststoffkuchens. Bei diesen Erfahrungswerten müssen jedoch unterschiedliche Filtrationsgeschwindigkeiten, die sich beispielsweise bei unterschiedlich verdichteten Grundschichten oder unterschiedlichen Suspensionseigenschaften insbesondere Feststoffgrößenverteilung ergeben, berücksichtigt werden.

Nach Abschleudern der überstehenden Flüssigkeit als Filtrat wird der verbleibende Feststoffkuchen entfeuchtet, wobei der Grad der Restfeuchte von der Entfeuchtungskinetik abhängt. Der Grad der Restfeuchte ist über die Feststoffkuchenhöhe unterschiedlich. Die dem Trommelmantel nächste, in ihrer Höhe unterschiedliche und vom Füllungsmedium abhängige Feststoftkuchenschicht ist mit Flüssigkeit gesättigt. Die darüber liegende Feststoffkuchenschicht ist zu Beginn des Entfeuchtungsvorgangs gesättigt und entfeuchtet in Abhängigkeit von der Entfeuchtungskinetik. Der Grad der Restfeuchte an der Füllungsoberfläche ist zu jedem Zeitpunkt der Entfeuchtung geringer oder gleich dem des restlichen Feststoffkuchens und steht nicht zwingend in immer gleichem Zusammenhang mit dem Grad der Restfeuchte des restlichen Feststoffkuchens.

Es sind Verfahren bekannt, im speziellen Ultraschall- und Infrarotmessverfahren, die durch eine berührungslose Messung den Grad der Restfeuchte des Feststoffkuchens in einer Schälzentrifuge während des Entfeuchtungsvorgangs ermitteln. Die Reflektion der Impulse findet auf der Füllungsoberfläche statt, so dass nur der Grad der Restfeuchte an der Füllungsoberfläche ermittelt wird.

Mit Ultraschall wird z.B. gemäß der DE-A-19 716 128 in der Weise gemessen, dass die Echolaufzeit eines Ultraschallimpulses zwischen Ultraschallsender, der beaufschlagten Füllungsoberfläche und dem Ultraschallempfänger gemessen wird und der Grad der Restfeuchte durch die Auswertung der Echogüte eines reflektierten Ultraschallimpulses ermittelt wird. Messfehler entstehen durch Unterschiede in der Oberflächenbeschaffenheit, Dämpfe, Nebel und Staub.

Mit Infrarotstrahlung wird nach der Offenlegungsschrift EP-A-891 814 der Feuchtigkeitsgrad in der Weise gemessen, dass die Strahlungsintensität eines Lichtimpulses, der von der Füllungsoberfläche reflektiert wird, gemessen und der Grad der Restfeuchte durch die Auswertung der Veränderung der Strahlungsintensität ermittelt wird. Messfehler entstehen hierbei durch Unterschiede in der Oberflächenbeschaffenheit und durch Farbunterschiede des Füllmediums.

Bei dem aus DE-C-3615013 bekannten Verfahren zum Überwachen der Trocknungsphase in Filtrations-zentrifugen werden, beginnend mit dem Eindringen des Filtrats in den Filterkuchen, die Filterkuchen-höhe, die Schleuderzeit und unit Hilfe eines im Filtrastrom angeordneten Sensors die Filtratströmungsgeschwindigkeit fortlaufend gemessen und hieraus unter Verwendung einer maschinen - und materialabhängigen Konstanten dis momentane Restfeuchte bestimmt.

Der Erfindung liegt daher die Aufgabe zugrunde, eine Zentrifuge der eingangs genannten Art so zu gestalten, dass in produktberührter Weise der Grad der Restfeuchte so ermittelt wird, dass die Messung während des Entfeuchtungsvorgangs kontinuierlich und über die gesamte Feststoffkuchenhöhe oder einen großen Anteil der Feststoffkuchenhöhe stattfindet, um die Betriebszeiten der Fest-Flüssig-Trenneinrichtung auf das jeweils notwendige Maß beschränken zu können.

Diese Aufgabe wird durch die Zentrifuge mit den Merkmalen des Patentanspruchs 1 gelöst.

Bevorzugt sind die Sensoren im Trommelrand angebracht. Damit wird eine Verfolgung der Entfeuchtung über den Querschnitt des Feststoffkuchens möglich.

Bevorzugt ist ferner das Leitfähigkeits-oder Kapazitätsmessgerät im Trommelrand angebracht.

Die Sensoren sind besonders bevorzugt Elektroden aus einem Material ausgewählt aus der Reihe: korrosionsbeständiger Stahl, Platin, Gold, Nickel und Kupfer. Da die Elektroden vom Produkt berührt sind, sind chemisch inerte Materialien bevorzugt.

Das Messgerät ist in einer bevorzugten Ausführung mit einer Telemetrieeinheit verbunden, die Messdaten berührungslos aus der Zentrifugentrommel nach außen überträgt.

Ganz besonders bevorzugt ist eine Variante der Zentrifuge, bei der die Telemetrieeinheit einen Sender enthält, dem im Bereich des Zentrifugengehäuses ein Empfänger gegenüberliegend angeordnet ist. Hiermit wird während des Betriebes der Zentrifuge eine berührungslose Datenübertragung aus der Zentrifugentrommel möglich.

Der Empfänger ist in einer bevorzugten Ausführung der Vorrichtung mit einer Auswerteeinheit und einer Steuereinheit zur Steuerung des Zentrifugenbetriebes verbunden.

Das Messgerät zur Erfassung der Feuchte ist gemäß einer besonderen Bauform über eine externe, teilweise außerhalb der Zentrifugentrommel angeordnete Spannungsversorgung betrieben. Hiermit wird insbesondere bei einem an der rotierenden Trommel angebrachten Messgerät eine dauerhafte Spannungsversorgung und ununterbrochener Betrieb gewährleistet.

Die Spannungsversorgung besteht insbesondere bevorzugt aus einem Hochfrequenzsender mit Sendespule und einem AC/DC Wandler mit Empfängerspule, wobei der AC/DC Wandler mit dem Messgerät an der Trommel elektrisch verbunden ist und die gegebenenfalls benötigte Gleichspannung für das Messgerät liefert.

Zum Schutz vor Korrosion und Angriff durch die in der Zentrifuge behandelten Stoffe und Flüssigkeiten ist in einer weiteren bevorzugten Ausführung der Erfindung die im Bereich der Zentrifugentrommel angeordnete Spannungsversorgung, das Messgerät und ggf. die Telemetrieeinheit in einem Ring von der Umgebung abgeschlossen angeordnet, der aus einem nichtmetallischen Werkstoff, insbesondere aus glasfaserverstärktem Kunststoff besteht.

Besonders bevorzugt wird als Werkstoff ein härtbarer Kunststoff, insbesondere ein Epoxy- oder Phenolharz eingesetzt. In diesen sind die elektronischen Bauelemente an der Trommel eingebettet.

Um den äußeren Umfang des Rings ist insbesondere bevorzugt ein zusätzlicher Stützring angebracht, der mit dem Trommelrand fest verbunden ist.

Der Ring, der Stützring und die Sende- und Empfangseinheiten können lösbar oder unlösbar mit der Zentrifugentrommel bzw. dem Zentrifugengehäuse verbunden sein.

Die Erfindung kann in allen Zentrifugen zur Trennung von Flüssigkeiten und Feststoffen zum Einsatz kommen, insbesondere in Schälzentrifugen oder in anderen Filterzentrifugen insbesondere Stülpfilter- und Pendelzentrifugen sowie Zentrifugentrockenem und Siebzentrifugen insbesondere Schub- und Siebschneckenzentrifugen.

Zentrifugentrockner werden für die Trennung von Flüssigkeiten und Feststoffen mit mechanischer und thermischer Entfeuchtung eingesetzt.

Durch die Erfassung und Interpretation des Widerstands bzw, der Leitfähigkeit des Feststoffkuchens kann mit Hilfe der erfindungsgemäßen Zentrifuge folgendes ermittelt werden:
- Der poröse Filterkuchen ist mit Flüssigkeit gesättigt (charakteristisch ist ein niedriger Widerstand bzw. hohe Leitfähigkeit).
- Der poröse Filterkuchen ist zu einem bestimmten Ausmaß entfeuchtet (charakteristisch ist ein erhöhter Widerstand, wobei mit fortschreitender Entfeuchtung die Leitfähigkeit nicht linear, aber erkennbar und reproduzierbar abnimmt).

Die Vorrichtung ist in der Lage, den Grad der Restfeuchte kontinuierlich durch die Auswertung der Leitfähigkeit des Feststoffkuchens über eine Füllungshöhe von mehreren Zentimetern zu ermitteln. Bei Erreichen des gewünschten Restfeuchtegrades wird der Feststoffkuchen mittels der Schälvorrichtung ausgetragen und durch Einfüllen von Suspension wird ein neuer Verarbeitungszyklus begonnen. Aufgrund der Feststellbarkeit des aktuellen Restfeuchtegrades kann der Feststoffkuchen nach der jeweils minimal möglichen Entfeuchtungsdauer mit der jeweils gewünschten Restfeuchte ausgetragen werden.

Weiterhin werden als alternative geeignete Messvorrichtungen zur Erfassung und Interpretation des Restfeuchtegrades Messeinheiten mit Kondensatoren zur Kapazitätsmessung genannt, die an Stelle der Leitfähigkeitsmesseinrichtung in der Zentrifugentrommel integriert werden können.

Die Erfindung wird nachstehend anhand der Figuren beispielhaft näher erläutert.

### Es zeigen:

- Fig. 1: Eine Schälzentrifuge mit erfindungsgemäßer Messeinrichtung im Querschnitt als Schema.

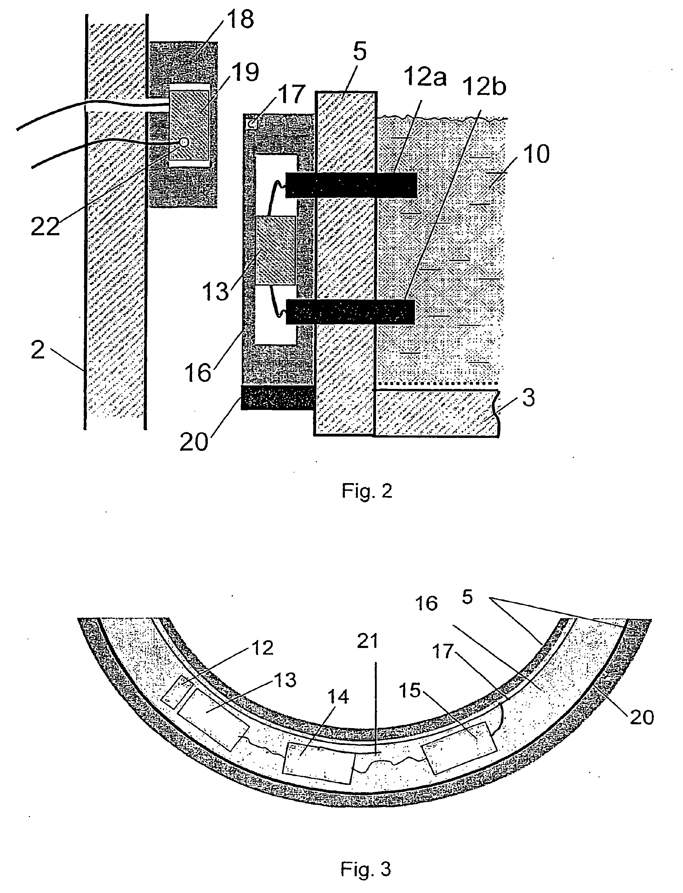

- Fig. 2: Ein vergrößertes Detail A aus Fig. 1.
- Fig. 3: Eine Teilansicht des Trommelrandes mit Messgerät, Telemetrie und Energieversorgung.
- Fig. 4: Ein Diagramm zur Erläuterung des Verarbeitungszyklusses, in dem der zur Leitfähigkeit proportionale Strom gegen die Zeit aufgetragen ist.

### Beispiele

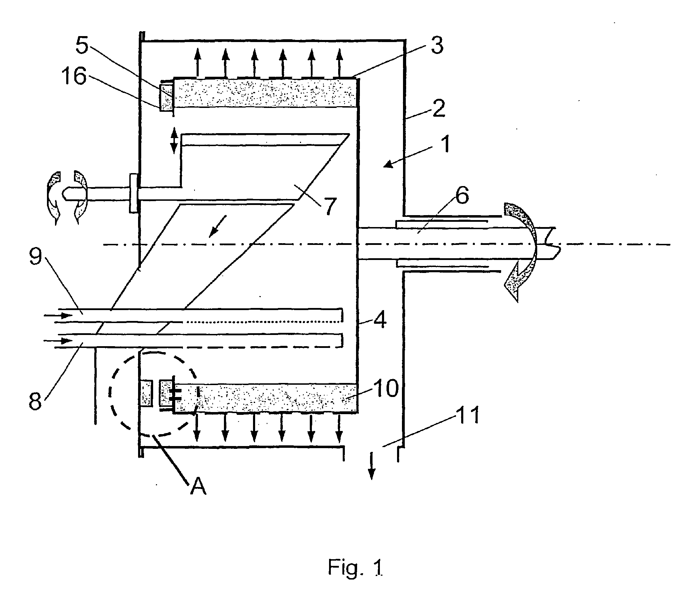

Ein Ausführungsbeispiel einer Zentrifuge gemäß der Erfindung ist anhand von Fig. 1 erläutert, die in schematischer Darstellung den Schnitt durch eine Filterzentrifuge zeigt. Danach ist eine Filtertrommel 1 in einem geschlossenen Zentrifugengehäuse 2 gelagert und mit dem nicht gezeichneten Antrieb verbunden. Die Filtertrommel 1 besteht aus einem eine Siebfläche enthaltenden Trommelmantel 3 sowie aus einem Trommelboden 4 und einem Trommelrand 5. Die Trommelwelle 6 trägt den Trommelboden 4 und ist im Zentrifugengehäuse 2 gelagert. In einer nicht gezeichneten alternativen Bauform weist die Filtertrommel 1 einen geschlossenen Trommelmantel mit Filtratablauf über den Trommelboden auf.

In die Filtertrommel 1 ragt eine Schälvorrichtung 7, die im Zentrifugengehäuse 2 schwenkbar gelagert ist. Des weiteren ragen in die Filtertrommel 1 ein Füllrohr 8 für die Produktsuspension und ein Waschrohr 9 für ein oder mehrere Waschflüssigkeiten.

Im Betrieb der Zentrifuge verteilt sich die über das Füllrohr 8 in die Filtertrommel 1 eingebrachte Suspension auf dem Trommelmantel 3 und separiert sich in einen aus Feststoffpartikeln bestehenden Feststoffkuchen 10 und eine darüberliegende Flüssigkeitsschicht aus Filtrat. Dies durchdringt den Feststoffkuchen 10, wird nach außen abgeschleudert und über den Filtratauslass 11, oder in der nicht gezeigten Ausführung mit geschlossenem Trommelmantel 3 über den Trommelboden 4, aus dem Zentrifugengehäuse 2 abgeleitet. Auf den verbleibenden Feststoffkuchen 10 wird die in die Filtertrommel 1 eingebrachte Waschflüssigkeit verteilt, durchdringt den Feststoffkuchen 10, wird nach außen abgeschleudert und über den Filtratauslass 11 aus dem Zentrifugengehäuse 2 abgeleitet. Der Feststoffkuchen 10 wird durch kürzeres oder längeres Abschleudern der Porenflüssigkeit entfeuchtet und in Intervallen mittels der Schälvorrichtung 7 aus der Filtertrommel 1 ausgetragen.

Die Feuchtemesseinrichtung ist ein Leitfähigkeitsmessgerät, bestehend aus den räumlich getrennten, zur Filtertrommel 1 ortsfesten, Elektroden 12a, 12b, deren Enden in den Feststoffkuchen 10 ragen, und deren Messsignal in einem Messumformer 13 umgewandelt und einem hochfrequent betriebenen Telemetrieeinheit 14 zugeführt wird. Über einen AC/DC-Wandler 15 werden die Geräte mit Gleichspannung versorgt. Die Bauteile 13 bis 15 sind in einem auf dem Trommelrand 5 befestigten und der Bewegung der Filtertrommel 1 folgenden Ring 16 aus Phenolharz, das mit Glasfasern verstärkt ist, integriert.

In dem Ring 16 ist weiterhin über den Umfang eine Kupferempfängerspule 17 integriert, über die in der Weise eine Wechselspannung induziert wird, dass sich an dem Zentrifugengehäuse 2 eine Sendevorrichtung 18 befindet, die mehrere Kupfersenderspulen 19 enthält und über einen Generator (nicht gezeichnet) mit Strom versorgt wird.

Der Ring 16 ist zur Entlastung des Ringmaterials gegen Fliehkräfte von einem mit dem Trommelrand 5 verbundenen Stützring 20 aus Stahl umgeben.

Zur Übertragung des gemessenen Signals wird der von der Senderantenne 21 des Senders der Telemetrieeinheit 14 gesendete Messwert von einem Empfänger 22 aufgenommen und an eine hier nicht gezeichnete Messwerteeinheit (PC) weiter geleitet.

Die Einheiten 16 und 18 können, insbesondere bei nicht ausreichender Dimensionierung des Spalts zwischen Außenfläche Trommelrand 5 und Zentrifugengehäuse 2, alternativ in den Trommelrand 5 respektive das Zentrifugengehäuse 2 integriert werden.

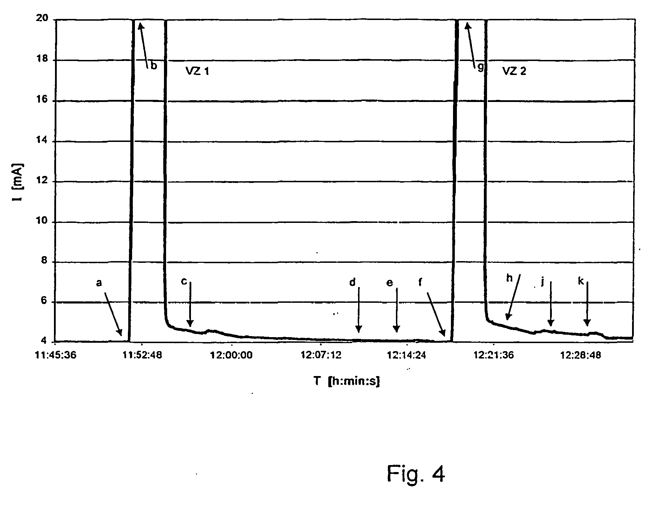

Ein Betriebsversuch, der mit der Erfindung durchgeführt wurde, wird anhand eines Verarbeitungszyklus-Diagramms (siehe Fig. 4) der Schälzentrifuge auf Basis der Leitfähigkeit des Feststoffkuchens erläutert und es wird der Vorteil der Vorrichtung gemäß der Erfindung deutlich

Im Verarbeitungszyklus VZ1 wird die Suspension im Zeitraum (a) bis (b) der Filtertrommel 1 zugeführt, wodurch die Leitfähigkeit des Feststoffkuchens 10 auf ein Maximum ansteigt. Die Flüssigkeitsschicht über dem Feststoffkuchen 10 wird nach außen abgeschleudert und der Entfeuchtungsvorgang des Feststoffkuchens 10 beginnt zwischen (b) und (c), so dass die Leitfähigkeit deutlich absinkt. Bei (c) wird die Drehzahl der Filtertrommel 1 angehoben und der Entfeuchtungsvorgang bis (d) fortgesetzt, wonach der Feststofflcuchen 10 zwischen (d) und (e) ausgeschält wird und bei (f) ein neuer Verarbeitungszyklus beginnt. Im Verarbeitungszyklus VZ2 ist der Entfeuchtungsvorgang des Feststoffkuchens zwischen (h) und (j) kürzer als im Verarbeitungszyklus VZ1 zwischen (c) und (d), mit der Folge, dass die Leitfähigkeit respektive Restfeuchte des Feststofflcuchens höher ist.

Die Restfeuchte des ausgeschälten Feststoffkuchens kann anhand einer Feststoffprobe off-line kontrolliert und mit dem Messsignal zum Zeitpunkt des Ausschälvorgangs bei (d) und (j) verglichen werden.

## Patentansprüche

1. Zentrifuge zur Trennung von Flüssigkeiten und Feststoffen, insbesondere Schälzentrifuge, Filterzentrifuge, Zentrifugentrockner oder Siebzentrifuge, aufweisend eine Zentrifugentrommel (1), innerhalb welcher sich während das Betriebs ein Feststoffkuchen befindet, und eine Vorrichtung zur kontinuierlichen Bestimmung des Kestefeuchtegehalts, bestehend wenigstens aus mindestens zwei Sensoren, insbesondere Elektroden (12a, 12b), und einem mit den Sensoren zur Messung der Restfeuchte verbundenen Leitfähigkeits-oder Kapazitätsmessgerät (13), wobei die Sensoren (12a, 12b) von einander beabstandet innerhalb der Zentrifugentrommel (1) mitrotierend angeordnet sind, die Sensoren in den Feststoffkuchen ragen, und die Messung des Widerstands bzw. der Leitfähigkeit oder der Kapazität des Feststoffkuchens in dem Feststoffkuchens erfolgt.

2. Zentrifuge nach Anspruch 1, **dadurch gekennzeichnet, dass** die Sensoren (12a, 12b) im Trommelrand (5) angebracht sind.

3. Zentrifuge nach Anspruch 1 oder 2, **dadurch gekennzeichnet, dass** das Leitfahigkeits- oder Kapazitätsmessgerät (13) im Trommelrand (5) angebracht ist.

4. Zentrifuge nach einem der Ansprüche 1 bis 3, **dadurch gekennzeichnet, dass** die Sensoren (12a, 126) Elektroden aus einem Material ausgewählt aus der Reihe: korrosionsbeständiger Stahl, Platin, Gold, Nickel und Kupfer sind.

5. Zentrifuge nach einem der Ansprüche 1 bis 4, **dadurch gekennzeichnet, dass** das Leitfähigkeits- oder Kapazitätsmessgerät (13) mit einer Telemetriecinheit (14) verbunden ist, die Messdaten berührungslos aus der Zentrifugentrommel (1) nach außen überträgt.

6. Zentrifuge nach Anspruch 5, **dadurch gekennzeichnet, dass** die Telemetrieeinheit (14) einen Sender (21) enthält, dem im Bereich des Zentrifugengehliuses (2) ein Empfänger (22) gegenelberliegend angeordnet ist.

7. Zentrifuge nach Anspruch 6, **dadurch gekennzeichnet, dass** der Empfänger (22) mit einer Auswerteeinheit und einer Steuereinheit zur Steuerung des Zentrifugenbetriebes verbunden ist.

8. Zentrifuge nach einem der Ansprüche 1 bis 7, **dadurch gekennzeichnet, dass** das Leitfähigkeits- oder Kapazitätsmessgerät (13) über eine externe, teilweise außerhalb der Zentrifugentrommel (1) angeordnete Spannungsversorgung (15, 19) betrieben ist.

9. Zentrifuge nach Anspruch 8, **dadurch gekennzeichnet, dass** die Spannungsversorgung (15, 19) aus einem Hochfrequenzsender mit Sendespule (19) und einem AC/DC Wandler (15) mit Empfängerspule (17) besteht, wobei der AC/DC Wandler (15) mit dem Leitfähigkeits-oder Kapazitätsmessgerät (13) elektrisch verbunden ist.

10. Zentrifuge nach Anspruch 9, **dadurch gekennzeichnet, dass** der im Bereich der Zentrifugentromtnel (1) angeordnete AC/DC Wandler (15) mit Empfängerspule (17) zur Spannungsversorgung und das Leitfähigkeits- oder Kapazitätsmessgerät (13) in einem Ring (16) von der Umgebung abgeschlossen angeordnet sind, der aus einem nichtmetallischen Werkstoff, insbesondere aus glasfaserverstärktem Kunststoff besteht.

11. Zentrifuge nach Anspruch 10 und einem der Ansprüche 5 oder 6, **dadurch gekennzeichnet, dass** die im Bereich der Zentrifugentromiiiel (1) angeordnete Telemetrieeinheit (14) in dem Ring (16) von der Umgebung abgeschlossen angeordnet ist, der aus einem nichtmetallischen Werkstoff, insbesondere aus glasfaserverstärktem Kunststoff besteht.

12. Zentrifuge nach Anspruch 10 oder 11, **dadurch gekennzeichnet, dass** der Werkstoff ein härtbarer Kunststoff, insbesondere ein Epoxy- oder Phenolharz ist.

13. Zentrifuge nach Anspruch 11 oder 12, **dadurch gekennzeichnet, dass** um den äußeren Umfang des Rings (16) ein zusätzlicher Stützring (20) angebracht ist, der mit dem Trommelrand (5) fest verbunden ist.

## Claims

1. Centrifuge for the separation of liquids and solids, in particular a skimming centrifuge, filter centrifuge, centrifugal dryer or screen centrifuge having a centrifuge basket (1) in which a solids cake is located during operation and a device for continuously determining the residual moisture content of solids cakes in centrifuges which at least comprises at least two sensors, in particular electrodes (12a, 12b), and a conductivity or capacitance measuring device (13) which is connected to the sensors for measuring the residual moisture, the sensors (12a, 12b) being arranged spaced apart from one another within the centrifuge basket (1) in a co-rotating manner, the sensors protruding into the solids cake, and the measuring of the resistance or the conductivity, respectively, or the capacitance of the solids cake taking place in the solids cake.

2. Centrifuge according to Claim 1, **characterized in that** the sensors (12a, 12b) are provided in the edge of the basket (5).

3. Centrifuge according to Claim 1 or 2, **characterized in that** the conductivity or capacitance measuring device (13) is provided in the edge of the basket (5).

4. Centrifuge according to one of Claims 1 to 3, **characterized in that** the sensors (12a , 12b) are electrodes of a material selected from the series: corrosion-resistant steel , platinum, gold, nickel and copper.

5. Centrifuge according to one of Claims 1 to 4, **characterized in that** the conductivity or capacitance measuring device (13) is connected to a telemetry unit (14), which transmits measuring data contactlessly from the centrifuge basket (1) to the outside.

6. Centrifuge according to Claim 5, **characterized in that** the telemetry unit (14) contains a transmitter (21), arranged opposite which in the region of the centrifuge housing (2) is a receiver (22).

7. Centrifuge according to Claim 6, **characterized in that** the receiver (32) is connected to an evaluation unit and a control unit for controlling the operation of the centrifuge.

8. Centrifuge according to one of Claims 1 to 7, **characterized in that** the conductivity or capacitance measuring device (13) is operated by means of an external voltage supply (15, 19), arranged partly outside the centrifuge basket (1).

9. Centrifuge according to Claim 8, **characterized in that** the voltage supply (15, 17) comprises a high-frequency transmitter with a transmitting coil (19) and an AC/DC converter (15) with a receiver coil (17), the AC/DC converter (15) being electrically connected to the conductivity or capacitance measuring device (13).

10. Centrifuge according to Claim 9, **characterized in that** the AC/DC converter (15) with a receiver coil (17) are arranged in the region of the centrifuge basket (1) for voltage supply, and the conductivity or capacitance measuring device (13) are arranged such that they are closed from the surroundings in a ring (16), which consists of a non-metallic material, in particular of glass-fibre reinforced plastic.

11. Centrifuge according to Claim 10 one of Claims 5 or 6, **characterized in that** the telemetry unit (14) arranged in the region of the centrifuge basket (1) is arranged such that it is closed from the surroundings in the ring (16), which consists of a non-metallic material, in particular of glass-fibre reinforced plastic.

12. Centrifuge according to Claim 10 or 11, **characterized in that** the material is a curable plastic, in particular an epoxy resin or a phenolic resin.

13. Centrifuge according to Claim 11 or 12, **characterized in that** an additional supporting ring (20), which is firmly connected to the edge of the basket (5), is provided around the outer circumference of the ring (16).

## Revendications

1. Centrifugeuse pour la séparation de liquides et de matières solides, en particulier centrifugeuse avec racleur, centrifugeuse à filtre, séchoir centrifuge, centrifugeuse à panier-tamis, comportant un tambour de centrifugeuse (1) à l'intérieur duquel se trouve un tourteau de matières solides pendant le service et un dispositif pour la détermination continue de la teneur en humidité résiduelle composé d'au moins deux capteurs, en particulier des électrodes (12a, 12b), et d'un instrument de mesure de conductivité ou de capacité (13) relié aux capteurs pour la mesure de l'humidité residuelle, les capteurs (12a, 12b) étant espacés entre eux à l'intérieur du tambour de centrifugeuse (1) avec lequel ils tournent, les capteurs faisant saillie dans le tourteau de matières solides, et la mesure de résistance ou bien de conductivité ou de capacité du tourteau de matières solides étant effectuée dans le tourteau de matières solides.

2. Centrifugeuse selon la revendication 1, **caractérisée en ce que** les capteurs (12a, 12b) sont appliqués dans la bordure du tambour (5).

3. Centrifugeuse selon la revendication 1 ou 2, **caractérisée en ce que** l'instrument de mesure de conductivité ou de capacité (13) est appliqué dans la bordure du tambour (5 ).

4. Centrifugeuse selon l'une des revendications 1 à 3, **caractérisée en ce que** les capteurs (12a, 1 2b) sont des électrodes d'une matière choisie dans la série: acier résistant a la corrosion, platine, or, nickel et cuivre.

5. Centrifugeuse selon l'une des revendications 1 à 4, **caractérisée en ce que** l'instrument de mesure de conductivité ou de capacité (13) est relié à une unité de télémétrie (14) qui transmet des données de mesure, sans contact du tambour de centrifugeuse (1) vers l'extérieur.

6. Centrifugeuse selon la revendication 5, **caractérisée en ce que** l'unité de télémétrie (14) comprend un émetteur (21) en face duquel est disposé un récepteur (22) au niveau du carter de la centrifugeuse (2).

7. Centrifugeuse selon la revendication 6, **caractérisée en ce que** le récepteur (22) est relié à une unité d'évaluation et à une unité de commande pour la commande de service de centrifugeuse.

8. Centrifugeuse selon l'une des revendications 1 à 7, **caractérisée en ce que** l'instrument de mesure de conductivité ou de capacité (13) est mis en service par une alimentation externe en tension (15, 19) , partiellement disposée à l'extérieur du tambour de centrifugeuse (1).

9. Centrifugeuse selon la revendication 8, **caractérisée en ce que** l'alimentation en tension (15, 19) se compose d'un émetteur haute fréquence à bobine d'émission (19) et d'un transformateur CA/CC (15) à bobine de réception (17), le transformateur CA/Ce (15) étant électriquement relié à l'instrument de mesure de conductivité ou de capacité (13).

10. Centrifugeuse selon la revendication 9 , **caractérisée en ce que** le transformateur CA/ CC (1 5) à bobine de réception (17), disposé au niveau du tambour de centrifugeuse (1) pour l'alimentation en tension et l'instrument de mesure de conductivité ou de capacité (13) sont disposée dans un anneau (16), isolé de l'environnement, ledit anneau étant réalisé dans un matériau non métallique, notamment en matière plastique renforcée aux fibres de verre.

11. Centrifugeuse selon la revendication 10 et l'une des revendications 5 ou 6, **caractérisée en ce que** l'unité de télémétrie (14) disposée au niveau du tambour de centrifugeuse (1) est disposée dans l'anneau (16), isolée de l'environnement, ledit anneau étant réalisé dans un matériau non métallique, notamment en matière plastique renforcée aux fibres de verre.

12. Centrifugeuse selon la revendication 10 ou 11, **caractérisée en ce que** le matériau est une matière plastique durcissable, en particulier une résine époxy ou une résine phénol.

13. Centrifugeuse selon la revendication 11 ou 12, **caractérisée en ce qu'** un anneau complémentaire de maintien (20) est appliqué sur la circonférence extérieure de l'anneau (16), et fixement raccordé à la bordure du tambour (5)
